# EUROPÄISCHE PATENTSCHRIFT

(11) **EP 2 621 642 B1**
(45) Veröffentlichungstag und Bekanntmachung des Hinweises auf die Patenterteilung: **30.11.2016**
(21) Anmeldenummer: 11760501.4
(22) Anmeldetag: 26.09.2011
(51) Int. Cl.: B05D 7/00, C09D 5/18, B05D 1/02, B05D 3/12

(54) **VERFAHREN ZUM AUFBRINGEN EINER BRANDSCHÜTZENDEN BESCHICHTUNG AUF EIN SUBSTRAT**
METHOD FOR APPLYING A FIRE PROTECTION COATING TO A SUBSTRATE
PROCÉDÉ POUR APPLIQUER UN REVÊTEMENT IGNIFUGE SUR UN SUBSTRAT

(30) Priorität: 13.12.2010 DE 102010054341; 27.09.2010 DE 102010046536
(43) Veröffentlichungstag der Anmeldung: 07.08.2013
(73) Patentinhaber: Lufthansa Technik AG, 22335 Hamburg (DE)
(72) Erfinder: NOLTE, Mathias, 20354 Hamburg (DE)
(74) Vertreter: Glawe, Delfs, Moll
(86) Internationale Anmeldenummer: PCT/EP2011/066661
(87) Internationale Veröffentlichungsnummer: WO 2012/049009

(56) Entgegenhaltungen:
- WO-A1-2006/067478
- ANONYMOUS: 'Fire protection coatings for wood, steel, concrete, fabric, and fibre-glass Up to 20 years' maintenance cycle', [Online] 28 März 2010, Seiten 304 - 842, XP055180502 Gefunden im Internet: <URL:http://web.archive.org/web/20100328011 300/http://www.envirograf.com/acrobat/coati ngs.pdf> [gefunden am 2015-03-31]
- ANONYMOUS: 'ENVIROGRAF.COM - Literature', [Online] 28 März 2010, XP055180551 Gefunden im Internet: <URL:http://web.archive.org/web/20100328011 300/http://www.envirograf.com/main/literatu re.html> [gefunden am 2015-03-31]

## Beschreibung

Die Erfindung betrifft ein Verfahren zum Aufbringen einer brandschützenden Beschichtung auf ein Substrat sowie ein entsprechend beschichtetes Substrat.

Beim Innenausbau von Räumen werden häufig Verkleidungen, Möbel oder dergleichen mit Holzoberflächen, insbesondere Holzfurnieren, eingesetzt. Der Zweck der Beschichtung ist dabei zum einen die Verbesserung der Optik der Oberfläche und zum anderen der Schutz beispielsweise vor mechanischen Beanspruchungen. In bestimmten Fällen dient eine solche Beschichtung auch dazu, den Brandschutz zu verbessern.

Beispielsweise müssen beim Einbau von Möbeln oder Verkleidungen in den Innenraum eines Flugzeuges luftrechtliche Anforderungen an das Brandverhalten erfüllt werden. Beispielsweise wird ein solches Bauteil bei einem Bunsenbrenner-Brandtest für 60 s einer Flamme mit einer Temperatur von 860° C ausgesetzt. Nach dem Entfernen der Beflammung muss das Bauteil binnen 15 s verlöschen. Die Strecke zwischen Angriffspunkt der Flamme und dem am weitesten von der Flamme entfernten verbrannten Punkt auf der Probenoberfläche darf nicht mehr als 155 mm betragen (FAA CS 25.853 (a)).

Aus offenkundiger Vorbenutzung ist es bekannt, Holz mit einer flammhemmenden Imprägnierung zu versehen. Nachteilig daran ist, dass eine solche Imprägnierung das Holz verfärben kann und unter Umständen als Weichmacher in einer anschließend aufgebrachten Klarlackschicht wirkt. Ferner kann die Haftung einer Lackschicht auf der imprägnierten Oberfläche beeinträchtigt werden. Aus offenkundiger Vorbenutzung ist weiter bekannt, Klarlack mit chemischen Brandschutzmitteln zu versehen. Auch hier ist von Nachteil, dass es zu Verfärbungen der Holzoberfläche kommen kann und die Flammschutzmittel in unerwünschter Weise als Weichmacher wirken können.

WO 2006/067487 A1 offenbart eine Brandschutzbeschichtung für strukturelle Stahlkomponenten in Gebäuden.

Der Erfindung liegt die Aufgabe zugrunde, ein Verfahren sowie ein beschichtetes Substrat der eingangs genannten Art zu schaffen, das bzw. die gute Oberflächeneigenschaften verbinden mit gutem Brandschutz.

Das erfindungsgemäße Verfahren löst diese Aufgabe durch folgende Schritte:
a) Aufbringen einer ersten Klarlackschicht auf das Substrat;
b) Aufbringen einer intumeszierenden Brandschutzschicht auf die erste Klarlackschicht;
c) Aufbringen einer zweiten Klarlackschicht auf die intumeszierende Brandschutzschicht;
wobei die intumeszierende Brandschutzschicht in einer Schichtdicke von 40 bis 200 µm aufgebracht wird.

Zunächst seien einige im Rahmen der Erfindung verwendete Begriffe erläutert. Bei einem Substrat handelt es sich beispielsweise um ein Möbelstück, eine Wandverkleidung oder dergleichen. Bevorzugt ist ein Substrat mit einer Holzoberfläche.

Das Substrat kann aus Massivholz gefertigt sein oder vorzugsweise aus einem Holzfurnier auf einer Tragstruktur bestehen. Bei der Tragstruktur kann es sich um eine Spanplatte, eine Sandwichstruktur oder dergleichen handeln.

Der Begriff Klarlack bezeichnet eine im Wesentlichen transparente Beschichtung, die eine darunter befindliche Struktur wie beispielsweise Holzmaserung nicht überdeckt.

Auf dieser ersten Klarlackschicht wird als Zwischenschicht eine intumeszierende Brandschutzschicht aufgebracht. Eine intumeszierende Brandschutzschicht enthält Substanzen, die unter Einfluss von Hitze ihr Volumen erhöhen und auf diese Weise flammhemmend wirken. Intumeszierende Brandschutzmischungen, die zum Herstellen einer entsprechenden Beschichtung geeignet sind, sind beispielsweise offenbart in DE 197 51 434 A1.

Erfindungsgemäß wird auf die intumeszierende Brandschutzschicht eine zweite Klarlackschicht aufgebracht. Die erste und zweite Klarlackschicht können im Rahmen der Erfindung auch in jeweils mehreren Einzelschichten aufgebracht werden.

Die Erfindung ermöglicht es so, dass sowohl der zum Substrat weisende Bereich der gesamten Beschichtung als auch der zur äußeren Oberfläche weisende Bereich die Eigenschaften des verwendeten Klarlacks aufweisen, so dass die Beständigkeit der Oberfläche gegenüber äußeren Beanspruchungen sowie die Wechselwirkung mit dem Substrat vollständig durch die Eigenschaften des Klarlacks bestimmt werden. Die intumeszierende Brandschutzschicht ist gewissermaßen sandwichartig zwischen zwei Klarlackschichten eingefügt und kann daher weder die Oberflächeneigenschaften der gesamten Beschichtung noch die Wechselwirkung mit dem Substrat (insbesondere Holz) nachteilig beeinflussen. Die Ausbildung der Brandschutzschicht als intumeszierende Schicht erlaubt es andererseits, eine besonders gute Flammschutzwirkung zu erzielen.

Die erste und/oder zweite Klarlackschicht sind bevorzugt ausgewählt aus der Gruppe bestehend aus Polyurethancoatings, Polyestercoatings und Poly(meth)acrylatcoatings. Es handelt sich hierbei um Beschichtungen bzw. Coatings, die insbesondere zur Beschichtung von Holz und Holzfurnieroberflächen im Stand der Technik Verwendung finden.

Bei Polyurethancoatings reagieren zur Aushärtung Polyisocyanate mit hydroxylhaltigen Verbindungen. Bei der Hydroxylkomponente kann es sich beispielsweise um Polyester, Polyether oder Acrylharze handeln. Polyestercoatings härten üblicherweise durch Polyaddition ungesättigter Verbindungen aus. Gleiches gilt für Poly(meth)acrylate. Geeignete Coatings sind beispielsweise beschrieben in Ullmann's Encyclopedia of Industrial Chemistry, 6. Auflage, Band 24, Seite 594 ff. (Paints and Coatings); sowie Band 39, Seite 515 ff. (Wood, surface treatment) speziell für Holzoberflächen. Die zitierte Offenbarung wird zum Gegenstand auch der vorliegenden Anmeldung gemacht.

Die intumeszierende Brandschutzschicht kann erfindungsgemäß ein intumeszierendes Kunstharz aufweisen. Besonders geeignet ist ein intumeszierendes Kunstharz auf Melamin-/Formaldehydharz-Basis. Die intumeszierende Brandschutzschicht kann zusätzlich insbesondere flammhemmende Verbindungen wie beispielsweise Phosphorsäureester aufweisen. Geeignete intumeszierende Zusammensetzungen sind beispielsweise in DE 197 51 434 A1 beschrieben, auf die Offenbarung wird Bezug genommen. Kommerziell erhältlich sind solche intumeszierenden Brandschutzmischungen beispielsweise von der Firma AISCO Chemieprodukte GmbH unter der Bezeichnung 2-K-Brandschutz-Lacksystem K1+K2.

Die intumeszierende Brandschutzschicht kann erfindungsgemäß in einer Schichtdicke von vorzugsweise 60 bis 120 µm, insbesondere beispielsweise etwa 80 µm aufgebracht werden.

Bevorzugt werden die Klarlackschichten und/oder die intumeszierende Brandschutzschicht aufgespritzt, insbesondere mit einer Spritzpistole aufgebracht. Aufspritzen erlaubt die Schaffung einer qualitativ hochwertigen Beschichtung. Intumeszierende Brandschutzmassen des Standes der Technik werden in der Regel aufgetragen, beispielsweise mit einem Streichwerkzeug. Sie sind in der Regel vorgesehen für den Brandschutz von Gegenständen, bei denen die optische Qualität der Oberfläche nicht kritisch ist.

Erfindungsgemäß ist es bevorzugt, die Viskosität der intumeszierenden Mischung zur Herstellung einer erfindungsgemäßen intumeszierenden Brandschutzschicht dergestalt einzustellen, dass eine Applikation mit einer Spritzpistole möglich ist. In der Regel eignen sich Mischungen mit einer Viskosität von 16 s oder größer (gemessen nach DIN 53211 mit einem 4 mm-Auslaufbecher), um mit einer Spritzpistole appliziert zu werden. Bevorzugte Viskositätsbereiche sind 16 bis 100 s, vorzugsweise 17 bis 80 s, weiter vorzugsweise 19 bis 60 s. Das Einstellen der Viskosität kann mit einem geeigneten Lösungsmittel wie beispielsweise Wasser erfolgen.

Die intumeszierende Brandschutzschicht kann ein Additiv zur Kompatibilisierung mit den Klarlackschichten enthalten. Zur Kompatibilisierung von intumeszierenden Brandschutzmassen auf Melamin-/Formaldehyd-Basis mit Polyurethan-Klarlacken sind beispielsweise Polyethersiloxane geeignet, die in einer Konzentration von beispielsweise etwa 1 Gew.-% der intumeszierenden Brandschutzmasse zugesetzt werden. Entsprechende Polyethersiloxane sind beispielsweise erhältlich von der Firma Evonik unter der Bezeichnung TEGO Wet 270.

Gegenstand der Erfindung ist ferner ein Substrat mit einer brandschützenden Beschichtung, bei dem die Beschichtung aufweist:
a) eine erste Klarlackschicht auf dem Substrat;
b) eine in einer Schichtdicke von 40 bis 200 µm aufgebrachte, intumeszierende Brandschutzschicht auf der ersten Klarlackschicht;
c) eine zweite Klarlackschicht auf der intumeszierenden Brandschutzschicht.

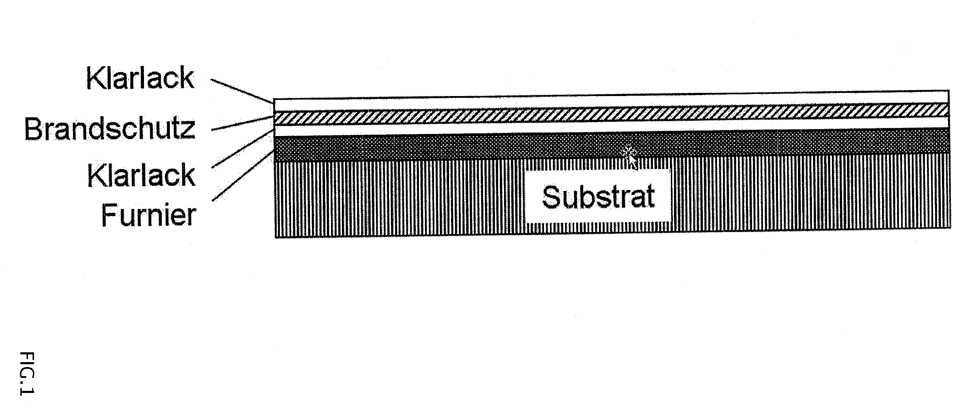

Ein Ausführungsbeispiel der Erfindung wird nachfolgend anhand der Zeichnung erläutert. Diese zeigt schematisch den Aufbau eines erfindungsgemäß beschichteten Substrats.

Als Substrat wird eine Honeycomb-Sandwichplatte mit aufgeklebtem Ahornfurnier verwendet.

Zur Herstellung der Klarlackschicht wird Crystallit® 2K PUR Top-Klarlack der Firma Zweihorn verwendet. Gemäß Herstellervorschrift werden Lackkomponente und Härterkomponente im Gewichtsverhältnis 10:1 angesetzt.

Als intumeszierende Brandschutzmischung wird das 2K Brandschutzlacksystem K1+K2 der AISCO Chemieprodukte GmbH verwendet. Gemäß Herstellervorschrift werden die Komponenten K1 und K2 im Gewichtsverhältnis 6:4 angemischt. Anschließend wird die Viskosität durch Verdünnung mit 20 Gew.-% Wasser angepasst und als Additiv 1 Gew.-% TEGO Wet 270 der Firma Evonik (Polyethersiloxan) eingemischt.

Die erste Klarlackschicht wird auf das Holzfurnier der Sandwichplatte aufgespritzt, bis eine geschlossenporige Oberfläche entsteht. Nach dem Aushärtenlassen wird diese erste Klarlackschicht angeschliffen und anschließend die intumeszierende Brandschutzschicht in einer Stärke von 80 µm aufgespritzt. Diese wird ebenfalls aushärten gelassen und angeschliffen. Auf diese angeschliffene und damit aktivierte intumeszierende Brandschutzschicht wird die zweite Klarlackschicht in zwei Spritzgängen aufgebracht.

Ein weiteres Ausführungsbeispiel wird nachfolgend erläutert.

Als Substrat wird eine Platte aus massivem Ahorn-Holz verwendet.

Zur Herstellung der Klarlackschicht wird Duritan® 2K Porenspachtel, Duritan® 3K High-Solid Füllgrund und Duritan® 3K High-Solid Hochglanzklarlack der Firma Zweihorn verwendet. Gemäß Herstellervorschrift werden Komponente A und B des Porenspachtels im Gewichtsverhältnis 1:1 angesetzt, Lack-Komponente, HärterKomponente und Aktivator-Komponente des Füllgrunds und des Hochglanzklarlacks im Gewichtsverhältnis 100:100:2.

Als intumeszierende Brandschutzmischung wird das Brandschutzsystem pyroplast-HW 300 der RÜTGERS Organics GmbH verwendet. Gemäß Herstellervorschrift werden die Komponenten K1 und K2 im Gewichtsverhältnis 6:4 angemischt. Anschließend wird die Viskosität durch Verdünnung mit 30 Gew.-% Wasser angepasst und als Additiv 1 Gew.-% TEGO Wet 270 der Firma Evonik (Polyethersiloxan) eingemischt.

Der Duritan® 2K Porenspachtel wird auf das Holzsubstrat aufgetragen, um die Poren des Holzes zu füllen. Nach dem Härten durch Anregung mit UV-Strahlung wird Duritan® 3K High-Solid Füllgrund aufgespritzt, bis eine geschlossenporige Oberfläche entsteht. Dabei werden Schichten von 100 µm Nassschichtstärke aufgebracht und einzeln durch UV-Anregung ausgehärtet. Diese Klarlackschicht wird plangeschliffen und anschließend die intumeszierende Brandschutzschicht in einer Nassschichtstärke von 100 µm aufgespritzt. Diese wird durch Lufttrocknung aushärten gelassen und angeschliffen. Auf diese angeschliffene und damit aktivierte intumeszierende Brandschutzschicht wird eine weitere Klarlackschicht aus Duritan® 3K High-Solid Füllgrund in zwei Spritzgängen aufgebracht. Abschließend wird die fein plangeschliffene Beschichtung mit Duritan® 3K High-Solid Hochglanzklarlack endlackiert. Nach dem Aushärten durch Anregung mit UV-Licht wird die Endlackschicht durch Polieren auf Hochglanz mit 90 Glanzeinheiten gebracht.

Die Abhebefestigkeit der erfindungsgemäßen Beschichtung nach DIN EN ISO 4624 beträgt etwa 2 MPa.

Der in der Beschreibungseinleitung geschilderte Brandtest ist in FAA CS 25.853 (a) normiert. Bei Durchführung dieses Tests mit der erfindungsgemäßen Beschichtung ergibt sich eine Nachbrenndauer von 0 s und eine verbrannte Strecke von 85 mm.

## Patentansprüche

1. Verfahren zum Aufbringen einer brandschützenden Beschichtung auf ein Substrat, mit den Schritten:
a) Aufbringen einer ersten Klarlackschicht auf das Substrat;
b) Aufbringen einer intumeszierenden Brandschutzschicht auf die erste Klarlackschicht;
c) Aufbringen einer zweiten Klarlackschicht auf die intumeszierende Brandschutzschicht;
wobei die intumeszierende Brandschutzschicht in einer Schichtdicke von 40 bis 200 µm aufgebracht wird.

2. Verfahren nach Anspruch 1, **dadurch gekennzeichnet, dass** die erste und/oder zweite Klarlackschicht ausgewählt ist aus der Gruppe bestehend aus Polyurethan-Coatings, PolyesterCoatings und Poly(meth)acrylat-Coatings.

3. Verfahren nach Anspruch 1 oder 2, **dadurch gekennzeichnet, dass** die intumeszierende Brandschutzschicht ein intumeszierendes Kunstharz aufweist.

4. Verfahren nach Anspruch 3, **dadurch gekennzeichnet, dass** das intumeszierende Kunstharz ein Melamin/Formaldehydharz ist.

5. Verfahren nach einem der Ansprüche 1 bis 4, **dadurch gekennzeichnet, dass** die intumeszierende Brandschutzschicht Phosphorsäureester aufweist.

6. Verfahren nach einem der Ansprüche 1 bis 5, **dadurch gekennzeichnet, dass** die intumeszierende Brandschutzschicht in einer Schichtdicke von 60 bis 120 µm aufgebracht wird.

7. Verfahren nach einem der Ansprüche 1 bis 6, **dadurch gekennzeichnet, dass** die Klarlackschichten und/oder die intumeszierende Brandschutzschicht aufgespritzt werden.

8. Verfahren nach einem der Ansprüche 1 bis 7, **dadurch gekennzeichnet, dass** das intumeszierende Brandschutzmittel eine Viskosität von 16 bis 100 s, vorzugsweise 17 bis 80 s, weiter vorzugsweise 19 bis 60 s (DIN 53 211 gemessen mit 4 mm DIN-Auslaufbecher) aufweist.

9. Verfahren nach einem der Ansprüche 1 bis 8, **dadurch gekennzeichnet, dass** das intumeszierende Brandschutzmittel ein Lösungsmittel, vorzugsweise Wasser, zur Viskositätseinstellung enthält.

10. Verfahren nach einem der Ansprüche 1 bis 9, **dadurch gekennzeichnet, dass** das Brandschutzmittel ein Additiv zur Kompatibilisierung mit der ersten und/oder zweiten Klarlackschicht enthält.

11. herfahren nach Anspruch 10, **dadurch gekennzeichnet, dass** das Additiv Polyethersiloxane enthält.

12. Verfahren nach einem der Ansprüche 1 bis 11, **dadurch gekennzeichnet, dass** das Substrat eine Holzoberfläche aufweist.

13. Substrat mit einer brandschützenden Beschichtung, **dadurch gekennzeichnet, dass** die Beschichtung aufweist:
a) eine erste Klarlackschicht auf dem Substrat;
b) eine in einer Schichtdicke von 40 bis 200 µm aufgebrachte, intumeszierende Brandschutzschicht auf der ersten Klarlackschicht;
c) eine zweite Klarlackschicht auf der intumeszierenden Brandschutzschicht.

14. Substrat nach Anspruch 13, **dadurch gekennzeichnet, dass** es eine Holzoberfläche aufweist.

## Claims

1. Process for applying a fire-protection coating to a substrate, with the following steps:
a) applying a first clearcoat layer to the substrate;
b) applying an intumescent fire-protection layer to the first clearcoat layer;
c) applying a second clearcoat layer to the intumescent fire-protection layer;
wherein the intumescent fire-protection layer is applied with a thickness of from 40 to 200 µm.

2. Process according to Claim 1, **characterized in that** the first and/or second clearcoat layer has/have been selected from the group consisting of polyurethane coatings, polyester coatings, and poly(meth)acrylate coatings.

3. Process according to Claim 1 or 2, **characterized in that** the intumescent fire-protection layer comprises an intumescent synthetic resin.

4. Process according to Claim 3, **characterized in that** the intumescent synthetic resin is a melamine/formaldehyde resin.

5. Process according to any of Claims 1 to 4, **characterized in that** the intumescent fire-protection layer comprises phosphoric ester.

6. Process according to any of Claims 1 to 5, **characterized in that** the intumescent fire-protection layer is applied with a thickness of from 60 to 120 µm.

7. Process according to any of Claims 1 to 6, **characterized in that** the clearcoat layers and/or the intumescent fire-protection layer is/are applied by spraying.

8. Process according to any of Claims 1 to 7, **characterized in that** the viscosity of the intumescent fire-protection composition is from 16 to 100 s, preferably from 17 to 80 s, more preferably from 19 to 60 s (DIN 53 211, measured using 4 mm DIN flow cup).

9. Process according to any of Claims 1 to 8, **characterized in that** the intumescent fire-protection composition comprises a solvent, preferably water, for adjusting viscosity.

10. Process according to any of Claims 1 to 9, **characterized in that** the fire-protection composition comprises an additive for compatibilization with the first and/or second clearcoat layer.

11. Process according to Claim 10, **characterized in that** the additive comprises polyether siloxanes.

12. Process according to any of Claims 1 to 11, **characterized in that** the substrate comprises a wood surface.

13. Substrate with a fire-protection coating, **characterized in that** the coating comprises:
a) a first clearcoat layer on the substrate;
b) an intumescent fire-protection layer applied with a thickness of from 40 to 200 µm on the first clearcoat layer;
c) a second clearcoat layer on the intumescent fire-protection layer.

14. Substrate according to Claim 13, **characterized in that** it comprises a wood surface.

## Revendications

1. Procédé pour appliquer un revêtement de protection anti-incendie sur un substrat, comprenant les étapes suivantes :
a) on applique une première couche de laque incolore sur le substrat ;
b) on applique une couche de protection anti-incendie intumescente sur la première couche de laque incolore ;
c) on applique une deuxième couche de laque incolore sur la couche de protection anti-incendie intumescente ;
dans lequel la couche de protection anti-incendie intumescente est appliquée avec une épaisseur de couche de 40 à 200 µm.

2. Procédé selon la revendication 1, **caractérisé en ce que** la première et/ou la deuxième couche de laque incolore est choisie parmi le groupe constitué par des revêtements de polyuréthane, des revêtements de polyester et des revêtements de poly(méth)acrylate.

3. Procédé selon la revendication 1 ou 2, **caractérisé en ce que** la couche de protection anti-incendie intumescente comprend une résine synthétique intumescente.

4. Procédé selon la revendication 3, **caractérisé en ce que** la résine synthétique intumescente est une résine mélamine-formaldéhyde.

5. Procédé selon l'une des revendications 1 à 4, **caractérisé en ce que** la couche de protection anti-incendie intumescente comprend un ester d'acide phosphorique.

6. Procédé selon l'une des revendications 1 à 5, **caractérisé en ce que** la couche de protection anti-incendie intumescente est appliquée avec une épaisseur de couche de 60 à 120 µm.

7. Procédé selon l'une des revendications 1 à 6, **caractérisé en ce que** les couches de laque incolore et/ou la couche de protection anti-incendie intumescente sont appliquées par pulvérisation.

8. Procédé selon l'une des revendications 1 à 7, **caractérisé en ce que** l'agent de protection anti-incendie intumescent présente une viscosité de 16 à 100 s, de préférence de 17 à 80 s, de manière encore préférée de 19 à 60 s (mesurée selon la norme DIN 53 211 avec une coupe d'écoulement DIN de 4 mm).

9. Procédé selon l'une des revendications 1 à 8, **caractérisé en ce que** l'agent de protection anti-incendie intumescent contient un solvant, de préférence de l'eau, pour régler la viscosité.

10. Procédé selon l'une des revendications 1 à 9, **caractérisé en ce que** l'agent de protection anti-incendie contient un additif pour la compatibilisation avec la première et/ou la deuxième couche de laque incolore.

11. Procédé selon la revendication 10, **caractérisé en ce que** l'additif contient du polyéthersiloxane.

12. Procédé selon l'une des revendications 1 à 11, **caractérisé en ce que** le substrat présente une surface en bois.

13. Substrat comportant un revêtement de protection anti-incendie, **caractérisé en ce que** le revêtement comprend :
a) une première couche de laque incolore sur le substrat ;
b) une couche de protection anti-incendie intumescente appliquée avec une épaisseur de couche de 40 à 200 µm sur la première couche de laque incolore ;
c) une deuxième couche de laque incolore sur la couche de protection anti-incendie intumescente.

14. Substrat selon la revendication 13, **caractérisé en ce qu'**il présente une surface en bois.
